# FASCICULE DE BREVET EUROPEEN

(11) **EP 1 211 128 B1**
(45) Date de publication et mention de la délivrance du brevet: **07.02.2007**
(21) Numéro de dépôt: 01402761.9
(22) Date de dépôt: 24.10.2001
(51) Int. Cl.: B60N 2/36, B60N 2/30

(54) **Agencement de sièges pour véhicule automobile**
Sitzanordnung für Kraftfahrzeuge
Arrangement of seats for a motor vehicle

(30) Priorité: 29.11.2000 FR 0015443
(43) Date de publication de la demande: 05.06.2002
(73) Titulaire: Peugeot Citroen Automobiles SA, 92200 Neuilly sur Seine (FR)
(72) Inventeur: Cazes, Christophe, 75009 Paris (FR); Levitre, Gilles, 92230 Gennevilliers (FR)
(74) Mandataire: Lanceplaine, Jean-Claude

(56) Documents cités:
- EP-A- 0 622 268
- DE-C- 19 928 855
- FR-A- 2 572 340
- GB-A- 255 752
- US-A- 4 227 736
- US-A- 5 492 386
- US-A- 5 839 773
- US-A- 5 868 451
- US-A- 5 979 964
- US-A- 6 089 641

## Description

La présente invention concerne un agencement de sièges dans un habitacle de véhicule automobile, selon le préambule de la revendication indépendante, préambule qui est généralement connu dans l'art.

Certains types de véhicules automobiles sont équipés, derrière la rangée de sièges avant, d'une ou de plusieurs rangées de sièges qui sont modu-lables de façon à adapter l'habitabilité du véhicule en fonction du nombre de passagers et/ou des charges à transporter.

Pour cela, on connaît dans les documents US-A-5 492 386 et US-A-6 089 641 des sièges qui sont conçus pour pouvoir basculer l'assise derrière la rangée de sièges située devant et rabattre le dossier de façon à augmen-ter le volume de chargement.

Mais, les solutions utilisées jusqu'à présent ne permettent pas, par des manoeuvres simples et sans effort important, de replier les sièges et d'obtenir un plancher de chargement continu et plat. Plus particulièrement, notamment ledit US-A-5 492 386 décrit une série de modes de réalisation dans lesquels, pour moduler l'espace, il faut d'abord replier chaque dossier de la rangée de sièges intermédiaires sur l'assise correspondante et ensuite basculer l'ensemble dans le logement.

On connaît également des sièges démontables qui peuvent être enlevés pour agrandir le volume de chargement.

Le principal inconvénient de cette solution réside dans la nécessité du démontage.

En effet, il faut libérer les différents sièges de leur ancrage sur le plancher du véhicule et ranger les sièges démontés, en dehors du véhicule, dans des locaux. Lorsque l'on a besoin d'une place de passager supplémentaire, il faut de nouveau rechercher le siège et procéder à son remontage. Ainsi, l'adaptation de l'espace interne du véhicule en fonction de son utilisation nécessite un temps de préparation et des efforts importants.

De plus, en milieu urbain, le possesseur d'un tel véhicule ne dis-pose pas toujours d'un local permettant le stockage des sièges enlevés.

L'invention a pour but d'éviter ces inconvénients en proposant un agencement de sièges dans un habitacle de véhicule automobile permettant, sans enlèvement de siège et en effectuant des manoeuvres simples, de moduler le nombre de places en fonction des passagers ainsi que le volume de charge-ment selon les charges à transporter.

L'invention a donc pour objet un agencement de sièges dans un véhicule automobile, du type comportant, sur un plancher de ce véhicule, trois rangées de sièges, une rangée de sièges avant comprenant deux sièges formés chacun par une assise et un dossier, une rangée de sièges intermédiaires et une rangée de sièges arrière, caractérisé en ce que la rangée de sièges intermédiaires comprend au moins une assise et au moins un dossier déplaçables par pivotement entre une position d'utilisation et une position escamotée dans laquelle ladite assise est placée dans un logement ménagé dans le plancher au-dessous de la rangée de sièges avant et le dossier est placé sensiblement verticalement contre les dossiers de la rangée de sièges avant et en ce que la rangée de sièges arrière comprend deux sièges indépendants formés chacun par une assise et un dossier articulé sur ladite assise, chaque siège de la rangée de sièges arrière étant déplaçable par retournement entre une position d'utilisation et une position escamotée dans laquelle au moins l'assise de chaque siège est placée horizontalement dans un logement ménagé au-dessous de ladite assise de la rangée de sièges intermédiaires pour former une partie du plancher.

Selon d'autres caractéristiques de l'invention :
- ladite assise et ledit dossier de la rangée de sièges intermédiaires forment une banquette déplaçable entre ladite position d'utilisation et ladite position escamotée au moyen d'un mécanisme de pivotement, ladite assise comportant une portion centrale relevable contre ledit dossier,
- ladite assise et ledit dossier de la rangée de sièges intermédiaires forment deux sièges indépendants placés l'un à côté de l'autre et déplaçables chacun entre ladite position d'utilisation et ladite position escamotée au moyen d'un mécanisme de pivotement,
- chaque mécanisme de pivotement comprend au moins une bielle dont une première extrémité est montée articulée à l'avant de l'assise correspondante et dont l'autre extrémité est montée articulée sur le fond du logement ménagé au-dessous de la rangée de sièges avant,
- chaque siège de la rangée de sièges arrière est déplaçable par retournement suivant une rotation de 180° au moyen d'un mécanisme à bascule,
- chaque mécanisme à bascule comprend au moins une bielle dont une première extrémité est montée articulée à l'avant de l'assise correspondante et dont une seconde extrémité est montée articulée sur le plancher au-dessus du logement ménagé au-dessous de l'assise de la rangée de sièges intermédiaires,
- le dossier de chaque siège de la rangée de sièges arrière comporte, d'une part, une portion inférieure solidaire de l'assise correspondante en formant avec ladite assise un L et, d'autre part, une portion supérieure articulée sur ladite portion inférieure,
- la portion supérieure de chaque dossier de la rangée de sièges arrière est déplaçable, en position escamotée du siège, entre une position sensiblement verticale contre ledit dossier de la rangée de sièges intermédiaires et une position sensiblement horizontale dans le logement ménagé au-dessous de la rangée de sièges avant permettant de placer la rangée de sièges intermédiaires en position d'utilisation,
- le dossier de chaque siège de la rangée de sièges arrière est monté articulé sur l'assise correspondante,
- le dossier de chaque siège de la rangée de sièges arrière est déplaçable, en position escamotée du siège, entre une position sensiblement verticale contre ledit dossier de la rangée de sièges intermédiaires et une position sensiblement horizontale en prolongement de l'assise correspondante dans le logement ménagé au-dessous de la rangée de sièges intermédiaires permettant de placer ladite rangée de sièges en position d'utilisation,
- la profondeur du logement ménagé au-dessous de la rangée de sièges avant est supérieure à la profondeur du logement ménagé au-dessous de la rangée de sièges arrière.

D'autres caractéristiques et avantages de l'invention apparaîtront au cours de la description qui va suivre, donnée à titre d'exemple et faite en se référant aux dessins annexés, sur lesquels :
- la Fig. 1 est une vue schématique en élévation d'un habitacle de véhicule automobile dans lequel sont agencés des sièges,
- la Fig. 2 est une vue schématique de dessus montrant l'agencement des sièges en position d'utilisation,
- la Fig. 3 est une vue schématique en élévation de l'habitacle montrant le déplacement en position escamotée de la rangée de sièges intermédiaires, selon un premier mode de réalisation,
- la Fig. 4 est une vue schématique en coupe selon la ligne 4-4 de la Fig. 3,
- la Fig. 5 est une vue schématique en élévation de l'habitacle montrant le déplacement en position escamotée de la rangée de sièges intermédiaires, selon un second mode de réalisation,
- la Fig. 6 est une vue en coupe selon la ligne 6-6 de la Fig. 5,
- les Figs. 7 et 8 sont deux vues schématiques en élévation de l'habitacle montrant le déplacement en position escamotée de la rangée de sièges arrière, selon deux positions,
- la Fig. 9 est une vue schématique de dessus de l'habitacle montrant la position des sièges des rangées intermédiaires et arrière en position escamotée,
- la Fig. 10 est une vue schématique en élévation de l'habitacle montrant le positionnement de la rangée de sièges intermédiaires en position d'utilisation et de la rangée de sièges arrière en position escamotée,
- la Fig. 11 est une vue schématique en élévation de l'habitacle montrant une variante de la rangée de sièges intermédiaires et de la rangée de sièges arrière en positon escamotée,
- la Fig. 12 est une vue schématique en élévation de l'habitacle montrant une autre variante de la rangée de sièges intermédiaires et de la rangée de sièges arrière en position escamotée,
- la Fig. 13 est une vue schématique en élévation de l'habitacle montrant le positionnement de la rangée de sièges intermédiaires en position d'utilisation et de la rangée de sièges arrière en position escamotée selon la variante de la Fig. 12.

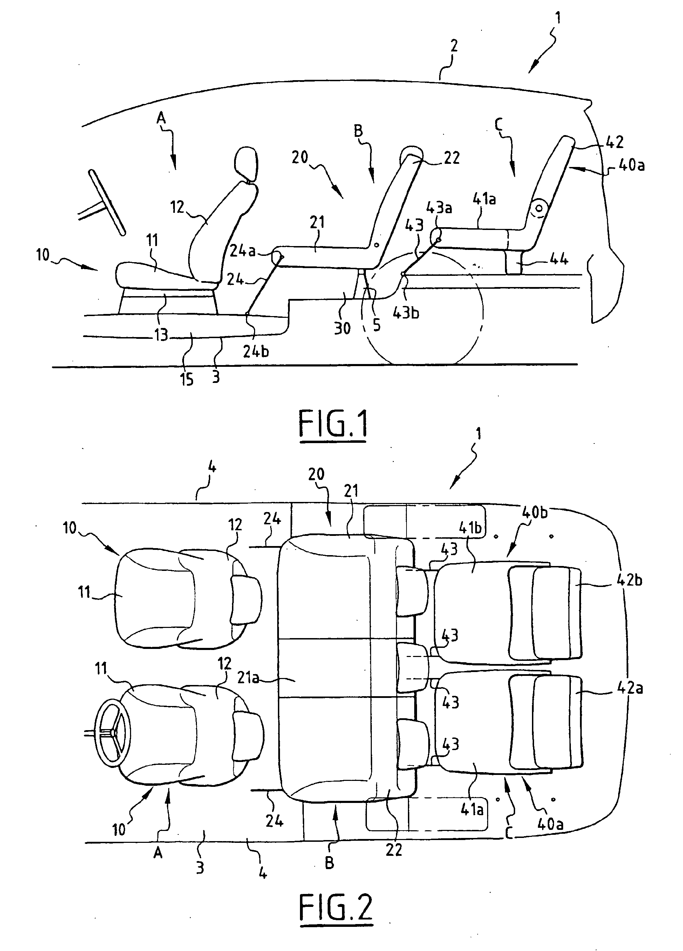

Sur les Figs. 1 et 2, on a représenté schématiquement un véhicule automobile comportant une carrosserie 1 dont on a montré une partie du pavillon 2 et une partie du plancher 3 reliés entre eux par des montants latéraux 4.

Le véhicule représenté sur ces figures est du type "monospace" comportant, dans le sens de la marche, trois rangées de sièges, une rangée de sièges avant A, une rangée de sièges intermédiaires B et une rangée de sièges arrière C.

Dans l'ensemble des exemples de réalisation représentés sur les figures, la rangée de sièges avant A se compose de deux sièges 10 comprenant chacun une assise 11 et un dossier 12.

La rangée de sièges intermédiaires B est composée d'au moins une assise 21 et d'au moins un dossier 22.

Enfin, la rangée de sièges arrière C comprend deux sièges 40a et 40b formés chacun par une assise, respectivement 41 a et 41 b, et un dossier, respectivement 42a et 42b.

De manière classique, chaque siège 10 de la rangée de sièges avant A est montée déplaçable longitudinalement sur des glissières 13 afin de pouvoir régler la position de chacun de ces sièges 10 en fonction de la morphologie du passager.

Ainsi que représenté par exemple à la Fig. 1, le plancher 3 comporte, au-dessous de la rangée de sièges avant A, un premier logement 15 et, au-dessous de la rangée de sièges intermédiaires B, un second logement 30, la profondeur du premier logement 15 étant supérieure à la profondeur du second logement 30.

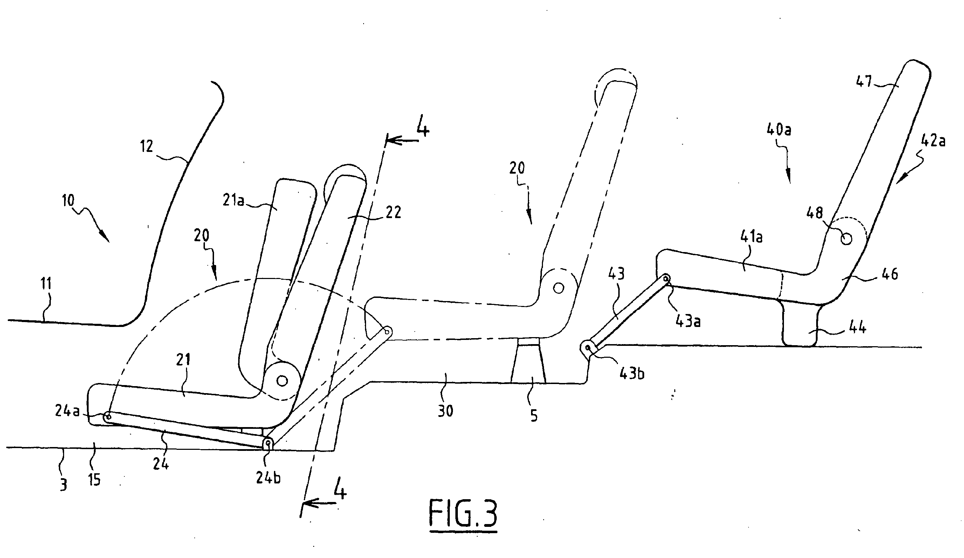

Selon un premier mode de réalisation représenté sur les Figs. 2 à 4, l'assise 21 et le dossier 22 de la rangée de sièges intermédiaires B forment une banquette 20 déplaçable entre une position d'utilisation dans laquelle la banquette 20 est en appui sur au moins un pied 5, comme représentée en pointillés à la Fig. 3, et une position escamotée dans laquelle l'assise 21 est placée dans le logement 15 ménagé dans le plancher 3 au-dessous de la rangée de sièges avant A et le dossier 22 est placé sensiblement verticalement contre les dossiers 12 de ladite rangée de sièges avant A, ainsi que représentée en trait plein à la Fig. 3.

Pour permettre le déplacement de la banquette 20 entre sa position d'utilisation et sa position escamotée, cette banquette 20 comporte un mécanisme de pivotement constitué par au moins une bielle 24 dont une première extrémité 24a est montée articulée à l'avant de l'assise 21 et dont une seconde extrémité 24b est montée articulée sur le fond du logement 15.

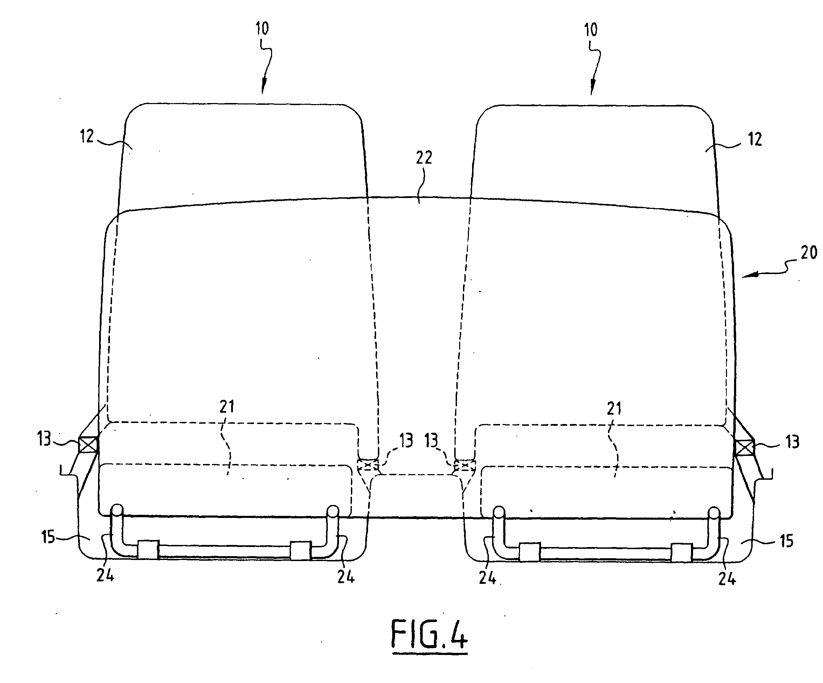

De préférence, le mécanisme de pivotement est constitué de deux bielles 24 (Fig. 4) s'étendant parallèlement l'une par rapport à l'autre et fixées par exemple au niveau de chaque bord latéral de l'assise 21 de la banquette 20.

Dans le cas où le plancher 3 du véhicule automobile est pourvu d'un tunnel 6 s'étendant depuis le compartiment moteur jusqu'au train de roulement arrière, par exemple pour le passage d'un arbre de transmission, l'assise 21 comporte une portion centrale 21 a relevable contre le dossier 22 lorsque la banquette 20 est placée en position escamotée, comme représentée à la Fig. 3.

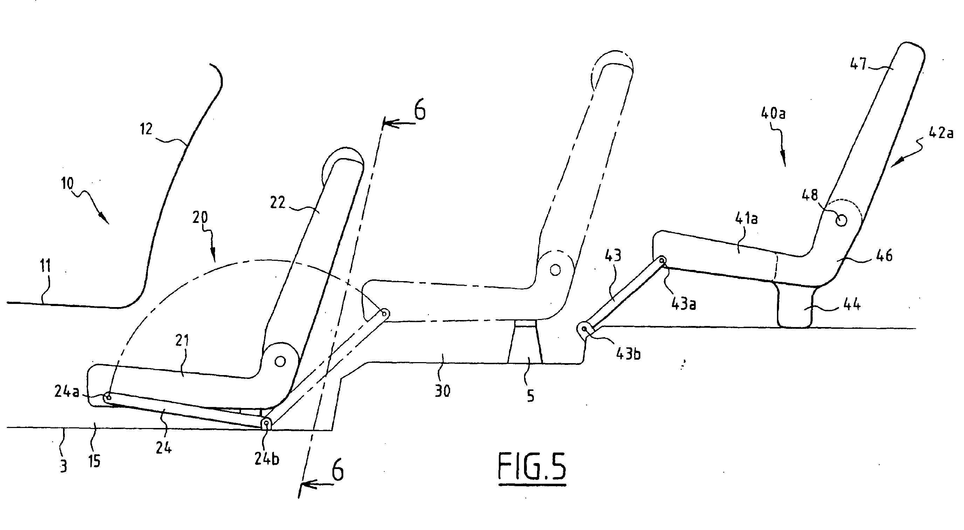

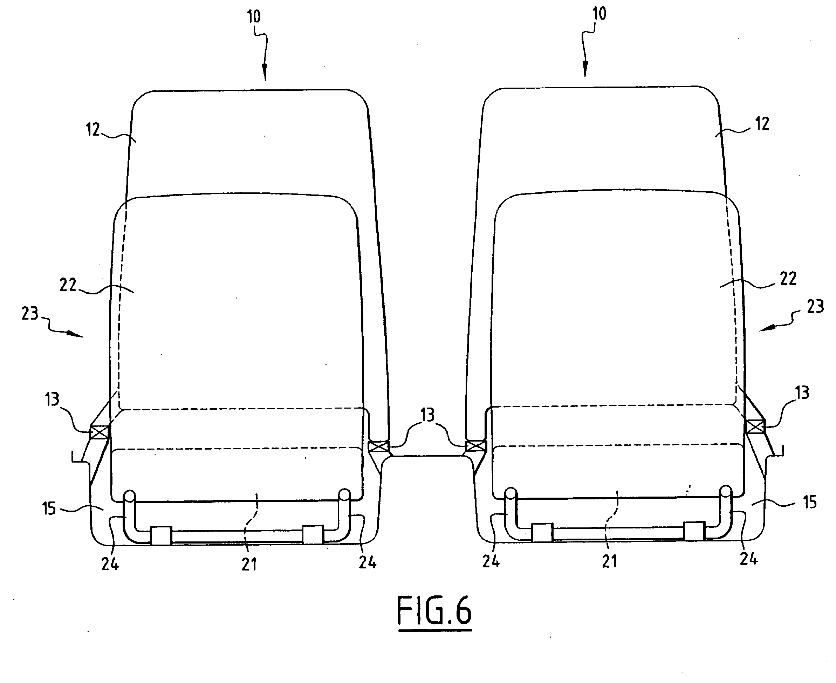

Selon une variante représentée aux Figs. 5 et 6, l'assise 21 et le dossier 22 de la rangée de sièges intermédiaires B forment deux sièges indépendants 23 déplaçables chacun entre la position d'utilisation dans laquelle chaque siège est en appui sur au moins un pied 5 et la position escamotée dans laquelle l'assise 21 de chaque siège 23 est placée dans le logement 15 au-dessous de la rangée de sièges avant A et le dossier 22 est placé sensiblement verticalement contre un dossier 12 de ladite rangée de sièges avant A.

Dans ce cas également, chaque siège 23 comporte un mécanisme de pivotement formé par au moins une bielle 24 dont une première extrémité 24a est montée articulée sur le bord avant de l'assise 21 et dont une seconde extrémité 24b est montée articulée sur le fond du logement 15.

De préférence, le mécanisme de pivotement est formé pour chaque siège 23 par deux bielles 24, comme montrées à la Fig. 6.

En position escamotée, les matelassures des assises 21 et des dossiers 22 sont protégées contre des éventuelles salissures.

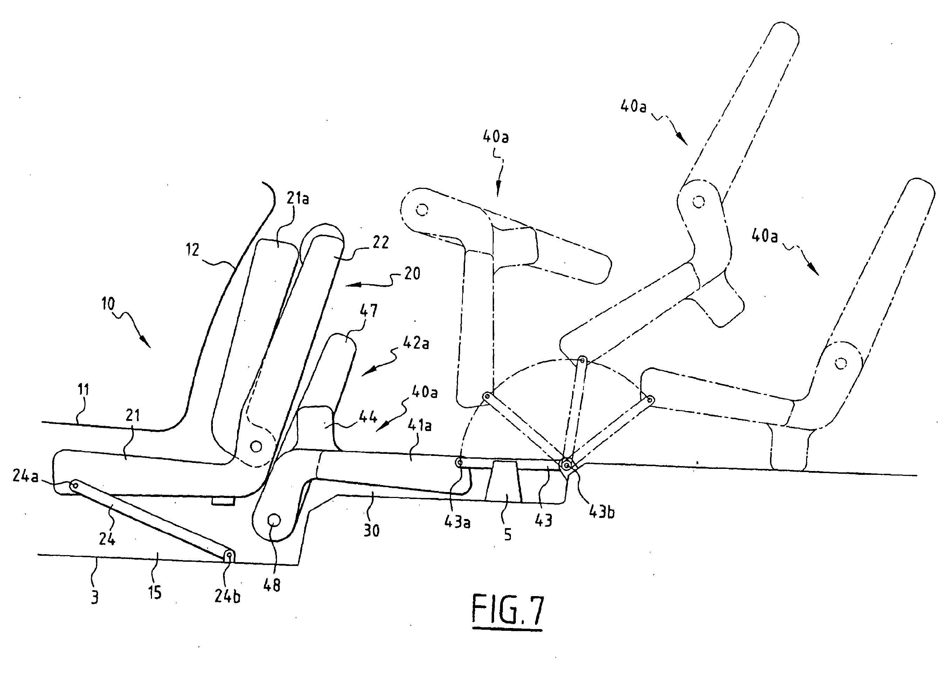

Les sièges 40a et 40b de la rangée de sièges arrière C sont déplaçables chacun indépendamment l'un de l'autre entre une position d'utilisation représentée par exemple sur les Figs. 3 et 5 et une position escamotée dans laquelle au moins l'assise 41 a et 41 b de chaque siège 40a et 40b est placée horizontalement dans le logement 30 ménagé au-dessous de l'assise 21 de la rangée de sièges intermédiaires C, comme représenté notamment sur les Figs. 7 à 9.

Chaque siège 40a et 40b de la rangée de sièges arrière C est donc déplaçable par retournement suivant une rotation de 180° au moyen d'un mécanisme à bascule comprenant au moins une bielle 43. De préférence, le mécanisme à bascule de chaque siège 40a et 40b est formé de deux bielles 43 s'étendant parallèlement l'une par rapport à l'autre et comportant une extrémité 43a montée articulée à l'avant de l'assise 41 a et 41 b correspondante et une seconde extrémité 43b montée articulée sur le plancher 3 au-dessus du fond du logement 30 ménagé au-dessous de l'assise 21 de la rangée de sièges intermédiaires B.

Les assises 41 a et 41 b comportent chacune, sur sa face inférieure, au moins un pied 44 destiné à s'appuyer sur le plancher 3 du véhicule automobile lorsque les sièges 40a et 40b sont en position d'utilisation.

Selon un premier mode de réalisation représenté sur les Figs. 3, 5, 7 et 8, chaque dossier 42a et 42b du siège 40a et 40b correspondant comporte, d'une part, une portion inférieure 46 solidaire de l'assise 41a et 41b correspondante en formant avec ladite assise un L et, d'autre part, une portion supérieure 47 articulée sur ladite portion inférieure 46 au moyen d'un axe d'articulation horizontal 48. La portion inférieure 46 comporte une partie centrale ajourée de façon à pouvoir rabattre la partie supérieure 47 du dossier 42a et 42b correspondant vers le bas.

Le basculement des rangées de sièges intermédiaires B et arrière C est réalisé de la façon suivante.

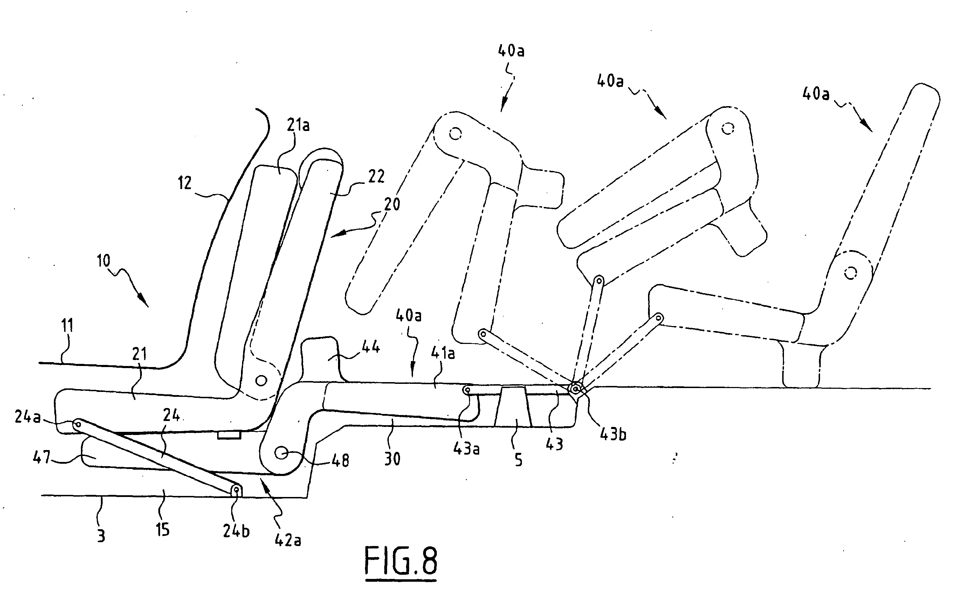

Tout d'abord, l'utilisateur bascule par l'intermédiaire des bielles 24 la banquette 20 ou les sièges 23 de la rangée de sièges intermédiaires B de façon à placer l'assise 21 dans le logement 15 au-dessous de la rangée de sièges avant A et le dossier 22 contre la face arrière des dossiers 12 des sièges 10, ainsi que représenté sur les Figs. 7 et 8.

Dans le cas où le plancher 3 comporte un tunnel 6, l'utilisateur relève la partie centrale 21 a de l'assise 21.

Ensuite, l'utilisateur soulève le siège 40a de la rangée de sièges arrière C de façon à le basculer par retournement au moyen des bielles 43 et à lui faire décrire une rotation de 180°.

L'utilisateur a deux possibilités.

La première consiste à replier la partie supérieure 47du dossier 42a afin que, dans la position escamotée, la portion supérieure 47 dudit dossier 42a se trouve dans une position sensiblement verticale contre le dossier 22 de la rangée de sièges intermédiaires B, ainsi que représentée à la Fig. 7.

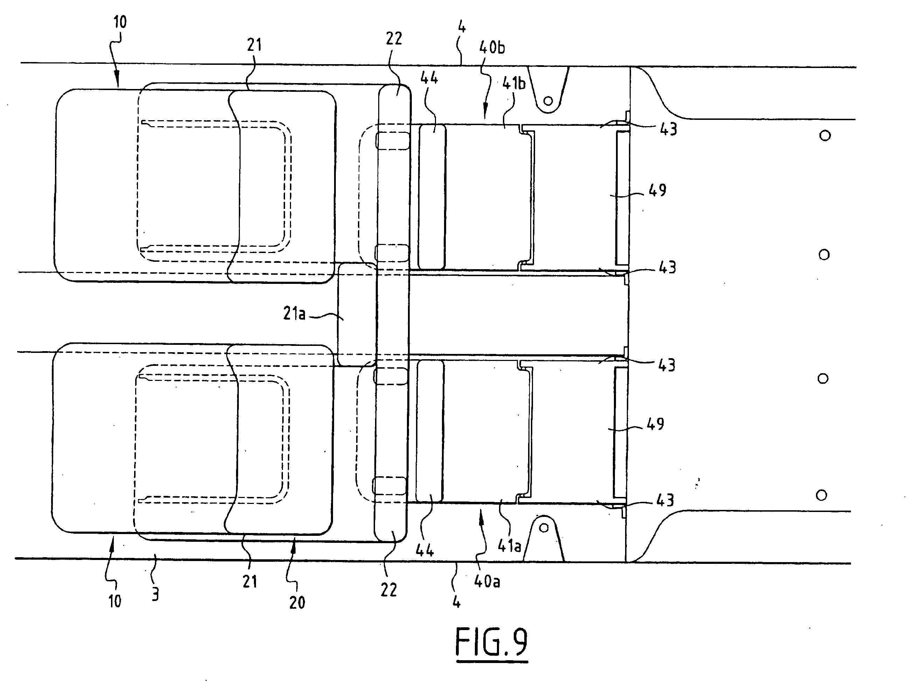

Dans la position escamotée des rangées de sièges intermédiaires B et arrière C, le plancher 3 présente une surface de chargement plane et de grande surface, comme montrée à la Fig. 9.

La seconde possibilité pour l'utilisateur consiste à pouvoir placer la portion supérieure 47 du dossier 42a en position horizontale dans le logement 15 au-dessous de l'assise 21 de la rangée de sièges intermédiaires B, comme représentée à la Fig. 8.

Dans ce cas, le plancher 3 présente une surface de chargement encore plus importante.

Le basculement du siège 40b de la rangée de sièges arrière C est réalisé de la même manière.

En position escamotée, les matelassures des assises 41 a et 41 b ainsi que des dossiers 42a et 42b sont protégées de toutes salissures.

Lors du basculement de la rangée de sièges intermédiaires B et de la rangée de sièges arrière C, les sièges 10 de la rangée de sièges A peuvent être déplacés vers l'avant au moyen des glissières 16 de façon à faciliter le basculement des rangées intermédiaires et arrière.

Afin de combler l'espace entre les bielles 43 en position escamotée des sièges 40a et 40b, ces bielles 43 sont de préférence reliées entre elles par une plaque 49 de façon à former une surface de chargement sur le plancher 3 continue et plane (Fig. 9).

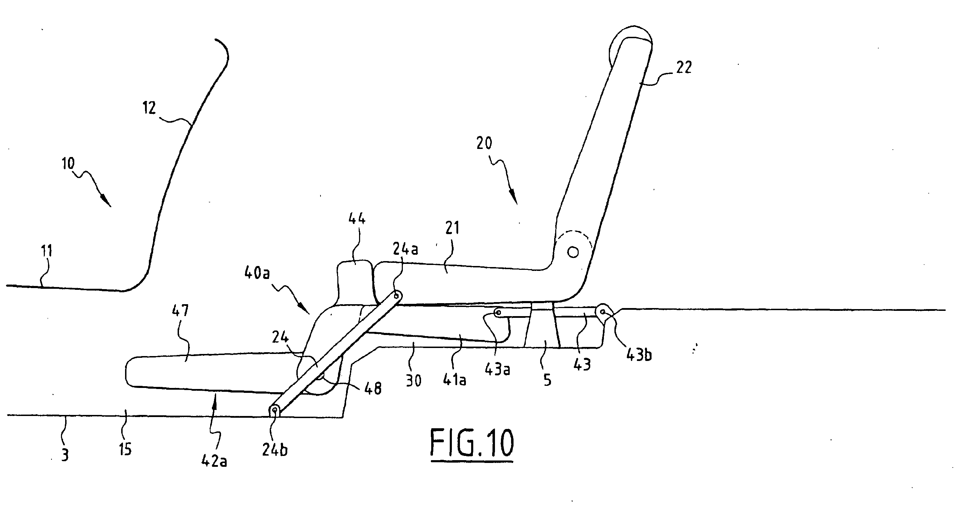

Par ailleurs, la position escamotée de l'un ou des deux sièges 40a et 40b de la rangée de sièges arrière C dans laquelle la ou les assises 41 a et 41 b sont placées dans le logement 30 et également dans laquelle la portion supérieure 47 du ou des dossiers 42a et 42b est placée horizontalement dans le logement 15 ainsi que représentée à la Fig. 10, permet de pouvoir replacer la banquette 20 ou un ou les deux sièges 23 en position d'utilisation afin de moduler le nombre de places en fonction des passagers transportés.

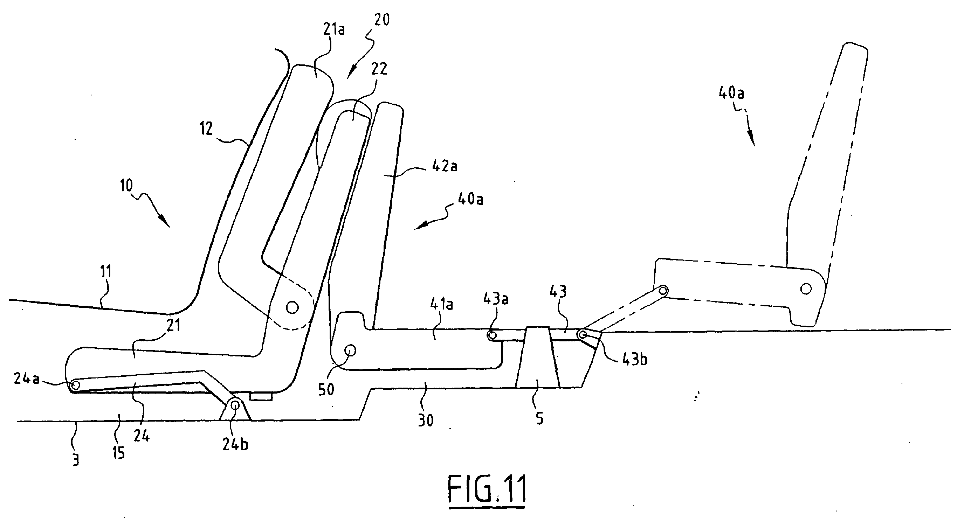

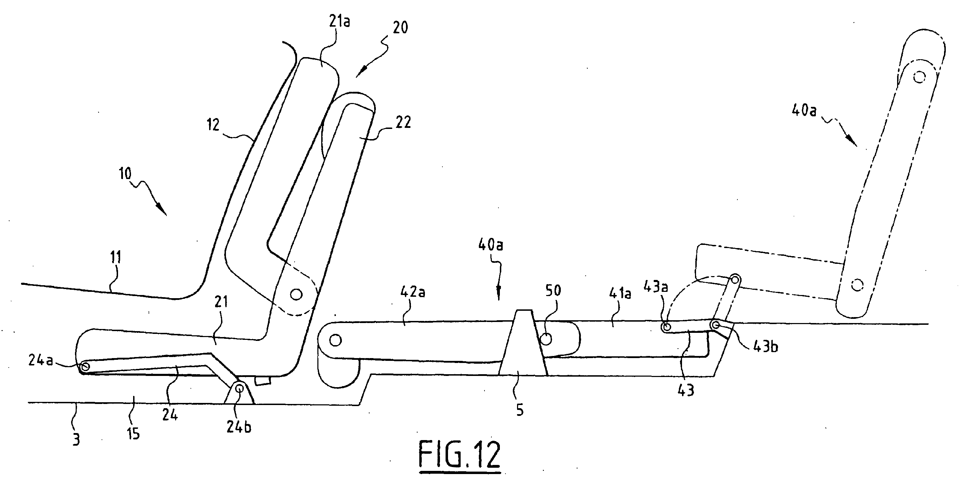

Selon deux autres modes de réalisation représentés sur les Figs. 11 et 12, chaque dossier 42a et 42b est monté directement articulé à sa base sur l'assise 41 a et 41 b correspondante au moyen d'un axe d'articulation 50 horizontal.

Dans le cas du mode de réalisation de la Fig. 11, l'extrémité 43a de chaque bielle 43 est montée articulée sur le bord de l'assise 41 a et 41 b correspondante.

Chaque siège 40a et 40b est également déplaçable par retournement selon une rotation de 180° entre une position d'utilisation représentée en pointillés à la Fig. 11 et une position escamotée représentée en trait plein sur cette figure.

Mais du fait du montage des bielles 43, un espace demeure entre le bord de l'assise 41 a et 41 b et le bord du logement 30 si bien qu'en position escamotée du siège 40a et 40b, chaque dossier 42a et 42b est placé dans une position sensiblement verticale contre le dossier 22 de la rangée de sièges intermédiaires B (Fig. 11).

Dans le cas du mode de réalisation de la Fig. 12, l'extrémité 43a de chaque bielle 43 est montée articulée au-dessous de l'assise 41a et 41b correspondante.

Ainsi en position escamotée de chaque siège 40a et 40b, l'espace entre le bord de l'assise 41 a et 41 b et le bord du logement 30 est réduit au minimum (Fig. 12) ce qui permet de pouvoir placer chaque dossier 42a et 42b dans une position sensiblement horizontale dans le prolongement de l'assise 41 a et 41 b correspondante à l'intérieur du logement 30.

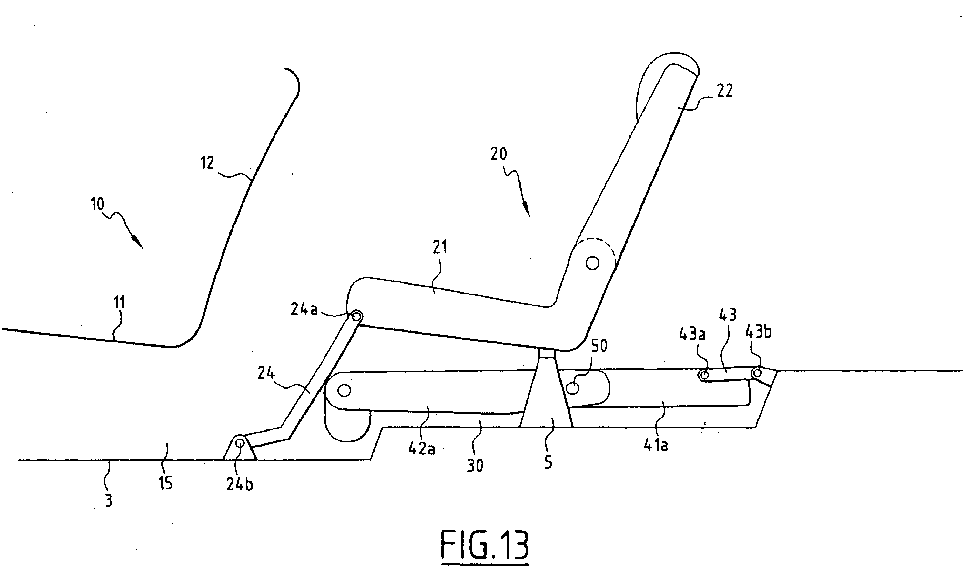

Cette disposition permet également de pouvoir replacer la banquette 20 ou le ou les sièges 23 de la rangée de sièges intermédiaires B en position d'utilisation, ainsi que représentée à la Fig. 13.

L'agencement selon l'invention permet de pouvoir disposer d'un véhicule dont le nombre de places est variable et qui peut être compris entre deux et sept passagers selon la configuration choisie.

Dans la position escamotée de la rangée de sièges arrière, ces sièges peuvent être dissimulés dans un faux plancher coulissant.

L'agencement selon l'invention offre, en outre, la possibilité de pouvoir disposer d'un plancher de chargement plat et de grande surface, tout en protégeant la matelassure des sièges escamotés, et également de pouvoir repositionner les sièges de la rangée de sièges intermédiaires pour utiliser le véhicule en configuration de quatre ou de cinq places avec un plancher arrière plat.

Cet agencement permet donc, en effectuant des manoeuvres simples, de moduler le nombre de places en fonction des passagers, ainsi que le volume de chargement selon les charges à transporter.

## Revendications

1. Agencement de sièges dans un véhicule automobile, du type comportant, sur un plancher (3) de ce véhicule, trois rangées de sièges, une rangée de sièges avant comprenant deux sièges (10) formés chacun par une assise (11) et un dossier (12), une rangée de sièges intermédiaires et une rangée de sièges arrière, **caractérisé en ce que** la rangée de sièges intermédiaires comprend au moins une assise (21) et au moins un dossier (22) déplaçables par pivotement entre une position d'utilisation et une position escamotée dans laquelle ladite assise (21) est placée dans un logement (15) ménagé dans le plancher (3) au-dessous de la rangée de sièges avant et le dossier (22) est placé sensiblement verticalement contre les dossiers (12) de la rangée de sièges avant et **en ce que** la rangée de sièges arrière comprend deux sièges (40a, 40b) indépendants formés chacun par une assise (41a, 41b) et un dossier (42a, 42b) articulé sur ladite assise (41a, 41b), chaque siège (40a, 40b) de la rangée de sièges arrière étant déplaçable par retournement entre une position d'utilisation et une position escamotée dans laquelle au moins l'assise (41a, 41b) de chaque siège (40a, 40b) est placée horizontalement dans un logement (30) ménagé au-dessous de ladite assise (21) de la rangée de sièges intermédiaires pour former une partie du plancher (3).

2. Agencement selon la revendication 1, **caractérisé en ce que** ladite assise (21) et ledit dossier (22) de la rangée de sièges intermédiaires forment une banquette (20) déplaçable entre ladite position d'utilisation et ladite position escamotée au moyen d'un mécanisme de pivotement (24), ladite assise (21) comportant une portion centrale (21 a) relevable contre ledit dossier (22).

3. Agencement selon la revendication 1, **caractérisé en ce que** ladite assise (21) et ledit dossier (22) de la rangée de sièges intermédiaires forment deux sièges (23) indépendants placés l'un à côté de l'autre et déplaçables chacun entre ladite position d'utilisation et ladite position escamotée au moyen d'un mécanisme de pivotement (24).

4. Agencement selon la revendication 2 ou 3, **caractérisé en ce que** chaque mécanisme de pivotement comprend au moins une bielle (24) dont une première extrémité (24a) est montée articulée à l'avant de l'assise (21) correspondante et dont l'autre extrémité (24b) est montée articulée sur le fond du logement (15) ménagé au-dessous de la rangée de sièges avant.

5. Agencement selon la revendication 1, **caractérisé en ce que** chaque siège (40a, 40b) de la rangée de sièges arrière est déplaçable par retournement suivant une rotation de 180° au moyen d'un mécanisme à bascule (43).

6. Agencement selon la revendication 5, **caractérisé en ce que** chaque mécanisme à bascule comprend au moins une bielle (43) dont une première extrémité (43a) est montée articulée à l'avant de l'assise (41 a, 41 b) correspondante et dont une seconde extrémité (43b) est montée articulée sur le plancher (3) au-dessus du logement (30) ménagé au-dessous de l'assise (21) de la rangée de sièges intermédiaires.

7. Agencement selon l'une quelconque des revendications 1, 5 ou 6, **caractérisé en ce que** le dossier (42a, 42b) de chaque siège (40a, 40b) de la rangée de sièges arrière comporte, d'une part, une portion inférieure (46) solidaire de l'assise (41a, 41b) correspondante en formant avec ladite assise un L et, d'autre part, une portion supérieure (47) articulée sur ladite portion inférieure (46).

8. Agencement selon la revendication 7, **caractérisé en ce que** la portion supérieure (47) de chaque dossier (42a, 42b)de la rangée de sièges arrière est déplaçable, en position escamotée du siège (40a, 40b) entre une position sensiblement verticale contre ledit dossier (22) de la rangée de sièges intermédiaires et une position sensiblement horizontale dans le logement (30) ménagé au-dessous de la rangée de sièges avant permettant de placer la rangée de sièges intermédiaires en position d'utilisation.

9. Agencement selon l'une quelconque des revendications 1, 5 ou 6, **caractérisé en ce que** le dossier (42a, 42b) de chaque siège (40a, 40b) de la rangée de sièges arrière est monté articulé sur l'assise (41a, 41b) correspondante.

10. Agencement selon la revendication 9, **caractérisé en ce que** le dossier (42a, 42b) de chaque siège (40a, 40b) de la rangée de sièges arrière est déplaçable, en position escamotée du siège (40a, 40b), entre une position sensiblement verticale contre ledit dossier (22) de la rangée de sièges intermédiaires et une position sensiblement horizontale en prolongement de l'assise (40a, 40b) correspondante dans le logement (30) ménagé au-dessous de la rangée de sièges intermédiaires permettant de placer ladite rangée de sièges en position d'utilisation.

11. Agencement selon l'une quelconque des revendications précédentes, **caractérisé en ce que** la profondeur du logement (15) ménagé au-dessous de la rangée de sièges avant est supérieure à la profondeur du logement (30) ménagé au-dessous de la rangée de sièges intermédiaires.

## Claims

1. Arrangement of seats in an automotive vehicle, of a type which includes on the floor (3) of this vehicle, three rows of seats, one front row of seats made up of two seats (10), each formed of a squab (11) and a back (12), a row of intermediate seats and a row of rear seats, **characterised by** the fact that the row of intermediate seats includes at least one squab (21) and at least one back (22) which can be moved by pivoting between a position of use and a foldaway position in which the said squab (21) is placed in a housing (15) formed in the floor (3) beneath the front row of seats and the back (22) is placed effectively vertically against the backs (12) of the front row of seats, and by the fact that the rear row of seats includes two independent seats (40a, 40b), each of which is formed of a squab (41a, 41b) and a back (42a, 42b) articulated on the said squab (41a, 41b), where each seat (40a, 40b) in the row of rear seats can be moved by being turned over between a position of use and a foldaway position in which at least the squab (41a, 41b) of each seat (40a, 40b) is placed horizontally in a housing (30) formed below the said squab (21) of the intermediate row of seats so as to form part of the floor (3).

2. Arrangement according to claim 1, **characterised by** the fact that the said squab (21) and said back (22) of the intermediate row of seats form a bench seat (20) which can be moved between the said position of use and the said foldaway position by means of a pivoting mechanism (24), with the said squab (21) including a central portion (21a) which can be folded up against the said back (22),

3. Arrangement according to claim 1, **characterised by** the fact that the said squab (21) and said back (22) of the intermediate row of seats form two independent seats (23) placed next to each other, each of which can be moved between the said position of use and the said foldaway position by means of a pivoting mechanism (24).

4. Arrangement according to claim 2 or 3, **characterised by** the fact that each pivoting mechanism includes at least one rod (24) whose first end (24a) is articulated on the front to the corresponding squab (21)
and whose other end (24b) is articulated on the base of the housing (15) formed beneath the front row of seats.

5. Arrangement according to claim 1, **characterised by** the fact that each seat (40a, 40b) in the rear row of seats can be moved by being turned over through a rotation of 180° using a tipping mechanism (43).

6. Arrangement according to claim 5, **characterised by** the fact that each tipping mechanism includes at least one rod (43), whose first end is articulated at the front of the corresponding squab (41a, 41b) and whose other end (43b) is articulated on the floor (3) above the housing (30) formed beneath the squab (21) of the intermediate row of seats.

7. Arrangement according to any one of claims 1, 5 or 6 whatsoever, **characterised by** the fact that the back (42a, 42b) of each seat (40a, 40b) of the rear row of seats includes, on the one hand, a lower portion (46) which is solidly fixed to the corresponding squab (41 a, 41b) forming an L shape with the said squab, and on the other hand, an upper portion (47) articulated on the said lower portion (46),

8. Arrangement according to claim 7 **characterised by** the fact that the upper portion (47) of each back (42a, 42b) of the rear row of rears can be moved, in the foldaway position of the seat (40a, 40b) between an essentially vertical position against the said back (22) of the intermediate row of seats and an effectively horizontal position in the housing (30) formed beneath the row of front seats which enables the intermediate row of seats to be placed in the position of use.

9. Arrangement according to any of claims 1, 5 or 6 whatsoever, **characterised by** the fact that the back (42a, 42b) of each seat (40a, 40b) of the rear row of seats is articulated on the corresponding squab(41a, 41b).

10. Arrangement according to claim 9, **characterised by** the fact that the back (42a, 42b) of each seat (40a, 40b) of the rear row of seats can be moved in the foldaway position of the seat (40a, 40b), between an effectively vertical position against the said back (22) of the intermediate row of seats and an effectively horizontal position extending from the corresponding squab (40a, 40b) in the housing (30) formed beneath the intermediate row of seats which allows the said row of seats to be placed in the position of use.

11. Arrangement according to any of the preceding claims, **characterised by** the fact that the depth of the housing (15) formed beneath the front row of seats is greater than the depth of the housing (30) formed beneath the intermediate row of seats.

## Patentansprüche

1. Anordnung von Sitzen in einem Kraftfahrzeug (der Art) mit drei Sitzreihen auf einem Boden (3) des Fahrzeuges, eine Vordersitzreihe umfassend zwei Sitze (10), die jeweils von einer Sitzfläche (11) und einer Rückenlehne (12) gebildet werden, eine Reihe mittlerer Sitze und eine Rücksitzreihe, **gekennzeichnet dadurch, dass** die Reihe mittlerer Sitze zumindest eine Sitzfläche (21) und zumindest eine Rückenlehne (22) umfasst, die durch Schwenken zwischen einer Betriebsstellung und einer zusammengeklappten Stellung, in der die Sitzfläche (21) in einem im Boden (3) unter der Vordersitzreihe angebrachten Fach (15) und die Rückenlehne (22) leicht vertikal gegen die Rückenlehnen (12) der Vordersitzreihe angeordnet wird, bewegbar sind, und **dadurch**, dass die Rücksitzreihe zwei separate, jeweils aus einer Sitzfläche (41a, 41b) und einer, auf der Sitzfläche (41a, 41b) gelenkig gelagerten Rückenlehne (42a, 42b) gebildeten Sitze (40a, 40b) umfasst, wobei jeder Sitz (40a, 40b) der Rücksitzreihe durch Umlegen zwischen einer Betriebsstellung und einer zusammengeklappten Stellung, in der zumindest die Sitzfläche (41a, 41b) jedes Sitzes (40a, 40b) horizontal in einem unter der Sitzfläche (21) der mittleren Sitzreihe angebrachten Fach (30) angeordnet wird und somit einen Teil des Bodens (3) bildet, bewegbar ist.

2. Anordnung gemäß Anspruch 1, **gekennzeichnet dadurch, dass** die Sitzfläche (21) und die Rückenlehne (22) der mittleren Sitzreihe eine Sitzreihe (20) bilden, die durch einen Schwenkmechanismus (24) zwischen der Betriebsstellung und der zusammengeklappten Stellung bewegbar ist, wobei die Sitzfläche (21) einen zentralen Bereich (21a) umfasst, der zu der Rückenlehne (22) hin einziehbar ist.

3. Anordnung gemäß Anspruch 1, **gekennzeichnet dadurch, dass** die Sitzfläche (21) und die Rückenlehne (22) der mittleren Sitzreihe zwei separate, nebeneinander angeordnete Sitze (23) bilden, die jeweils durch einen Schwenkmechanismus (24) zwischen der Betriebsstellung und der zusammengeklappten Stellung bewegbar sind.

4. Anordnung gemäß Anspruch 2 oder 3, **gekennzeichnet dadurch, dass** jeder Schwenkmechanismus zumindest eine Kurbelstange (24), deren erstes Ende (24a) gelenkig vorne an der entsprechenden Sitzfläche (21) und deren anderes Ende (24b) gelenkig auf dem Boden des unter der Vordersitzreihe angeordneten Faches (15) montiert ist, umfasst.

5. Anordnung gemäß Anspruch 1, **gekennzeichnet dadurch, dass** jeder Sitz (40a, 40b) der Rücksitzreihe durch Umlegen nach einer 180°-Drehung durch einen Kippmechanismus (43) bewegbar ist.

6. Anordnung gemäß Anspruch 5, **gekennzeichnet dadurch, dass** jeder Kippmechanismus zumindest eine Kurbelstange (43) umfasst, deren erstes Ende (43a) gelenkig vorne an der entsprechenden Sitzfläche (41 a,41 b) und deren zweites Ende (43b) gelenkig auf dem Boden (3) über dem unter der Sitzfläche (21) der mittleren Sitzreihe angeordneten Faches (30) montiert ist.

7. Anordnung gemäß einem der Ansprüche 1, 5 oder 6, **gekennzeichnet dadurch, dass** die Rückenlehne (42a, 42b) jedes Sitzes (40a, 40b) der Rücksitzreihe einerseits einen einstückigen unteren Bereich (46) der entsprechenden Sitzfläche (41 a, 41 b) unter Bildung eines L mit der Sitzfläche und andererseits einen oberen, auf dem unteren Bereich (46) gelenkig gelagerten Bereich (47) umfasst.

8. Anordnung gemäß Anspruch 7, **gekennzeichnet dadurch, dass** der obere Bereich (47) jeder Rückenlehne (42a, 42b) der Rücksitzreihe in der zusammengeklappten Stellung des Sitzes (40a, 40b) zwischen einer gegen die Rückenlehne (22) der mittleren Sitzreihe leicht senkrechte Stellung und einer leicht waagrechten Stellung in dem unter der Vordersitzreihe angeordneten Fach (30) bewegbar ist, wodurch die mittlere Sitzreihe in die Betriebsstellung gebracht werden kann.

9. Anordnung gemäß einem der Ansprüche 1, 5 oder 6, **gekennzeichnet dadurch, dass** die Rückenlehne (42a, 42b) jedes Sitzes (40a, 40b) der Rücksitzreihe gelenkig auf der entsprechenden Sitzfläche (41a, 41b) montiert ist.

10. Anordnung gemäß Anspruch 9, **gekennzeichnet dadurch, dass** die Rückenlehne (42a, 42b) jedes Sitzes (40a, 40b) der Rücksitzreihe in der zusammengeklappten Stellung des Sitzes (40a, 40b) zwischen einer gegen die Rückenlehne (22) der mittleren Sitzreihe leicht senkrechten Stellung und einer leicht waagrechten Stellung in Verlängerung der entsprechenden Sitzfläche (40a, 40b) im unter der mittleren Sitzreihe angeordneten Fach (30) bewegbar ist, wodurch die Reihe an Sitzen in die Betriebsstellung gebracht werden kann.

11. Anordnung gemäß einem der vorangehenden Ansprüche, **gekennzeichnet dadurch, dass** die Tiefe des unter der Vordersitzreihe angeordneten Faches (15) die Tiefe des unter der mittleren Sitzreihe angeordneten Faches (30) übersteigt.
